(19) Europäisches Patentamt
European Patent Office
Office européen des brevets

(11) **EP 0 929 826 B1**

(12) **EUROPÄISCHE PATENTSCHRIFT**

(45) Veröffentlichungstag und Bekanntmachung des Hinweises auf die Patenterteilung:
**02.01.2003 Patentblatt 2003/01**

(51) Int Cl.[7]: **G02B 1/00**

(21) Anmeldenummer: **98945132.3**

(22) Anmeldetag: **31.07.1998**

(86) Internationale Anmeldenummer:
**PCT/EP98/04801**

(87) Internationale Veröffentlichungsnummer:
**WO 99/006856 (11.02.1999 Gazette 1999/06)**

(54) **MIKROSKOP MIT ADAPTIVER OPTIK**

MICROSCOPE WITH ADAPTIVE OPTICS SYSTEM

MICROSCOPE A OPTIQUE ADAPTATIVE

(84) Benannte Vertragsstaaten:
**CH DE FR GB LI**

(30) Priorität: **01.08.1997 DE 19733193**

(43) Veröffentlichungstag der Anmeldung:
**21.07.1999 Patentblatt 1999/29**

(60) Teilanmeldung:
**02015411.8 / 1 253 457**

(73) Patentinhaber: **CARL ZEISS JENA GmbH
07745 Jena (DE)**

(72) Erfinder:
• **SIMON, Ulrich
D-07751 Rothenstein (DE)**
• **GLUCH, Martin
D-07743 Jena (DE)**
• **WOLLESCHENSKY, Ralf
D-99510 Schöten (DE)**
• **GRUB, Robert
D-73540 Heubach (DE)**
• **FAULSTICH, Andreas
D-37077 Göttingen (DE)**
• **VÖLCKER, Martin
D-37073 Göttingen (DE)**

(74) Vertreter: **Niestroy, Manfred et al
Patentanwälte
Geyer, Fehners & Partner
Sellierstrasse 1
07745 Jena (DE)**

(56) Entgegenhaltungen:
EP-A- 0 307 354     WO-A-93/22711
US-A- 4 579 430     US-A- 4 838 679

• J. GLUCKSTAD ET AL.: "Improvement of axial response in three dimensional light focusing by use of dynamic phase compensation" NAAO'97, Seiten 10-12, XP002090355
• SHEPPARD R. ET AL: 'Influence of spherical aberration on axial imaging of confocal reflection microscopy' APPLIED OPTICS Bd. 33, Nr. 4, 01 Februar 1994, Seiten 616 - 624
• UEKI H. ET AL.: 'Three-dimensional optical bit-memory recording and reading with a photorefrative crystal: analysis and experiment' APPLIED OPTICS Bd. 35, Nr. 14, 10 Mai 1996, Seiten 2457 - 2460
• TORIUMI A. ET AL: 'Nondestructive readout of a three-dimensional photochromic memory with a near-infrared differential phase-contrast microscope' OPTICS LETTERS Bd. 22, Nr. 8, 15 April 1997, Seiten 555 - 557

**Beschreibung**

**Gebiet der Erfindung**

Die Erfindung bezieht sich auf die Erweiterung gängiger Mikroskope um eine adaptive Optik im Beobachtungs- und/oder Beleuchtungsstrahlengang eines Mikroskops. Als adaptive Optik sind hierbei optisch wirksame Baugruppen zur Wellenfrontmodulation zu verstehen. Die adaptive Optik verändert die Phase und/oder die Amplitude des Lichtes gezielt derart, daß sowohl eine Verschiebung und Formung des Fokus im Objektraum, als auch eine Korrektur von eventuellen Aberrationen bewirkt wird. Die möglichen Einsatzgebiete umfassen die konfokale Mikroskopie, die lasergestützte Mikroskopie, die konventionelle Lichtmikroskopie und die analytische Mikroskopie.

**Stand der Technik**

Die vorliegende Erfindung geht von folgenden bisherigen Veröffentlichungen aus:

- US 4,408,874; W. Zinky, L. Rosenberg; 1981/1983: "Mechanisch oder pneumatisch deformierbares optisches Element zur astigmatischen Vergrößerungseinstellung für Abbildungssystemen in der Lithographie".
- EPO 0098969 B1; J. Arnaud; 1983/1987: "Deformierbares optisches Element zur astigmatischen Korrektur". Die Dicke der Spiegelmembran variiert über die Fläche, so daß beim Durchbiegen durch externe Kräfte die Membran eine zuvor berechnete Form annimmt.
- EPO 0307354 B1; H. Choffat; 1988/1992: "Ringanordnung aus bimorphen Piezoschichten zur axialen Feinverstellung von Komponenten, z.B. Mikroskopobjektive".
- US 5,142,132; B. MacDonald, R. Hunter, A. Smith; 1990/1992: "Adaptiv gesteuertes optisches System zur Waferherstellung (Stepper)". Das adaptive Element steuert den Fokus und korrigiert Aberrationen. Das Fehlersignal für die Korrektur wird aus dem vom Wafer rückreflektierten Licht durch Interferenz mit dem ursprünglichen Licht gewonnen. Ein genaues Verfahren zur Aberrationskorrektur wird nicht angegeben.
- DP DE 3404063 C2; A. Suzuki, M. Kohno; 1984/1993: "Gekrümmte durchlässige Membran im Strahlengang eines Abbildenden Systems zur Korrektur von Abbildungsfehlern, besonders der lateralen Fokusablage".
- US 5,504,575; R. Stafford; 1993/1996: "Spektrometer, basierend auf räumlichem Lichtmodulator und dispersivem Element". Es werden Fasern und optische Schalter /flexiblen Spiegel verwendet, um das Licht nach Durchgang durch das dispersive Element auf den Detektor zu schalten.
- EPO 167877; Bille, Heidelberg Instruments; 1985 angemeldet: "Ophtalmoskop mit adaptivem Spiegel".

Der Beschreibung der vorliegenden Erfindung liegen folgende Begriffsbestimmungen zugrunde:

- "Wellenfrontmodulator" im Sinne dieser Erfindung eine Einrichtung zur gezielten Beeinflussung der Phase und/oder der Amplitude einer Lichtwelle. Basierend auf einem reflektierenden optischen Element (deformierbarer Spiegel, elektrostatische Ansteuerung oder durch ein Piezoarray angesteuert oder als bimorpher Spiegel) oder einem transmittierendem optischen Element (LCD oder ähnliche Einheit). Dieses kann kontinuierlich oder segmentiert aufgebaut sein. Insbesondere können die Segmente zur Ansteuerung der jeweiligen Problemstellung angepaßt werden.
- "Aberrationen im Mikroskop": Die bei einem defokussierten Betriebsmode auftretenden Aberrationen des Mikroskopobjektives lassen sich kategorisieren in prinzipiell korrigierbare und nicht korrigierbare Anteile. Ursächlich können die Aberrationen eingeteilt werden in durch das Objektiv verursachte, durch die weitere Abbildungsoptik des Mikroskops verursachte und letztlich durch das Präparat selbst verursachte Aberrationen.
- "Ansteuerung des Wellenfrontmodulators": die Ansteuerung des Wellenfrontmodulators erfolgt durch einen Rechner mit Hilfe geeigneter Software. Die erforderlichen Stellgrößen sind entweder zuvor berechnet worden (offline) oder werden aus gemessenen Größen berechnet (online, z.B. durch einen Wellenfrontsensor oder durch Vermessung der Punkthelligkeit im Zwischenbild).

**Beschreibung der Erfindung**

Sowohl bei der konventionellen Licht- als auch bei der lasergestützten Mikroskopie muß der Fokus des Objektivs mit hoher Präzision sowohl entlang der optischen Achse als auch lateral verschoben werden. Bei konventionellen Mikroskopen geschieht dies durch mechanische Verschiebung des Objekttisches bzw. des Objektives. Zudem sind im Falle einer Beleuchtung mittels Laserstrahlung Verschiebungen im Objektraum notwendig. Es ergibt sich damit die Notwendigkeit einer dreidimensionalen Fokusführung im Objektraum.

Eine Verwendung einer adaptiven Optik besteht darin, die axiale Verschiebung des Fokus im Objektraum ohne Veränderung des Abstandes zwischen Objektiv und Objekt zu erreichen.

Dabei ist vorgesehen, diese Verschiebung an der Wellenfront des Strahlenganges vorzunehmen. Dabei entspricht die axiale Verschiebung des Fokus im Objekt einer sphärischen Veränderung der Wellenfront, die laterale Verschiebung einer Kippung der Wellenfront.

Es werden auch Aberrationen im Strahlengang durch Veränderung der Wellenfront ausgeglichen. Diese Manipulationen werden in einer *Pupillenebene des Strahlenganges* vorgenommen.

Um bei der *konventionellen Lichtmikroskopie im Beobachtungsstrahlengang* eine axiale Verschiebung des Fokus im Objektraum ohne eine Veränderung des Abstandes Objektiv zu Objekt zu erreichen, muß die Wellenfront in der Pupille des Objektivs oder einer zur Pupillenebene äquivalenten Ebene sphärisch verformt werden. Eine solche Verformung kann durch einen Wellenfrontmodulator, nämlich einen Wellenfront-Phasenmodulator, erreicht werden.

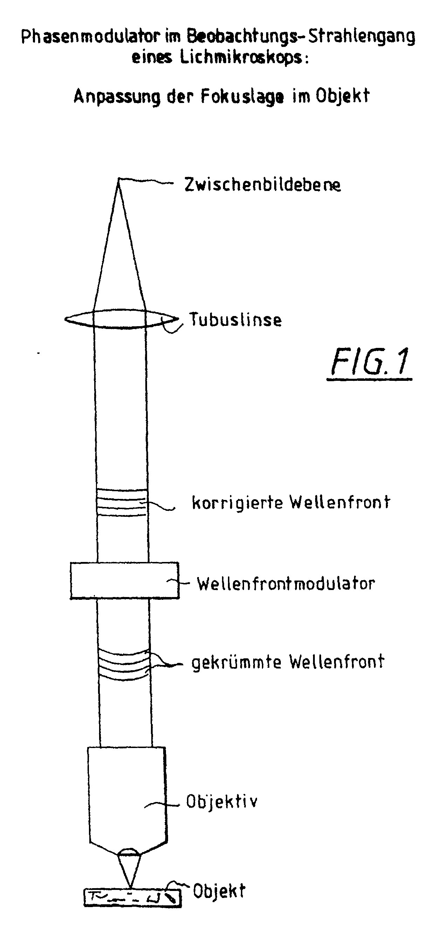

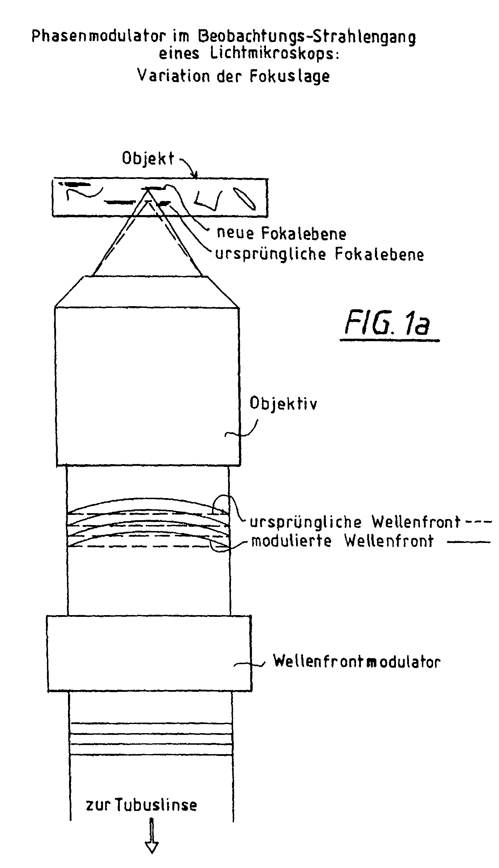

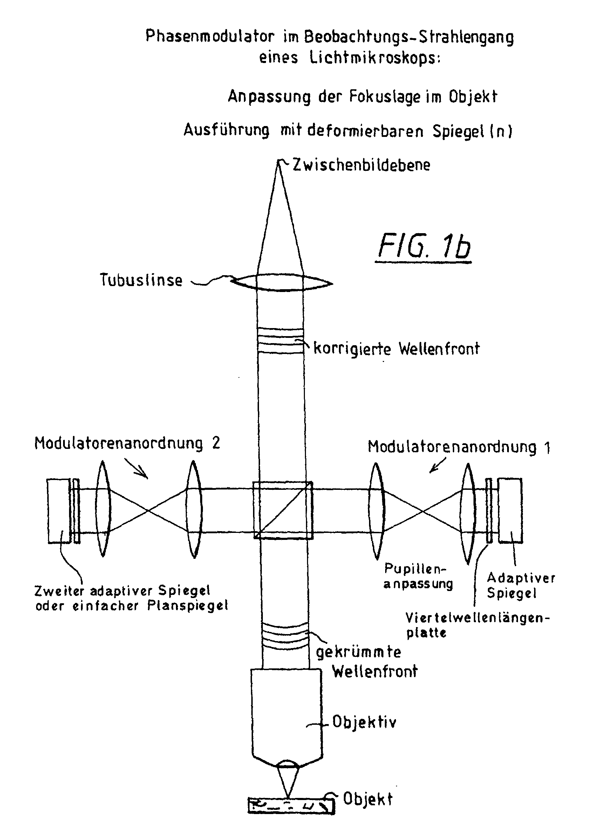

Fig.1 und Fig.1a zeigen einen schematischen Abbildungsstrahlengang eines Lichtmikroskopes mit einem betrachteten Objekt, einem Objektiv und einer Tubuslinse zur Erzeugung eines Zwischenbildes, das mit Okularen (nicht dargestellt) betrachtet werden kann. Zwischen Tubuslinse und Objektiv ist ein Wellenfrontmodulator angeordnet. Die nach dem Objektiv gekrümmte Wellenfront wird durch den Wellenfrontmodulator korrigiert, indem die Abberrationen des Objektivs ausgeglichen werden.

Berechnungen haben gezeigt, daß bei Krümmungsradien der Wellenfront in der Pupille zwischen -3,0m und 1,5m der Fokus um mehr als 1,5mm verschoben werden kann. Dies ist abhängig vom verwendeten Objektiv; im angegebenen Fall beziehen sich die Angaben auf das Epiplan-Neofluar 20x/0.5. Verschiebungen im Bereich einiger zehn Mikrometer reichen in den meisten Fällen bereits aus. Wie die mathematischen Rechnungen weiter gezeigt haben wird das Intervall einer möglichen Fokusverschiebung mit steigender Vergrößerung des Objektives geringer. Da das Objektiv jedoch nicht für diese sphärisch verformte Wellenfront in der Eintrittspupille berechnet und konstruiert ist, sind Aberrationen durch das Objektiv bei der Defokussierung nicht zu vermeiden.

Eine solche Fokusverschiebung ohne mechanische Beeinflussung des Objektives hat mehrere Vorteile. Zum einen wird durch den festen Arbeitsabstand von Objektivfrontlinse zum Objekt jegliche mechanische Beeinflussung des Objektes durch das Mikroskopobjektiv eliminiert. Es wird damit z.B. erst möglich am statischen, wasserimmergierten Objekt schnittweise Bildaufnahmen mit unterschiedlicher Tiefenlage der Beobachtungsebene durchzuführen. Eine solche Technik scheiterte bisher an der mechanischen Verformung des Objektes und seiner Umgebung durch mechanischen Druck auf das Präparat.

Durch den festen Arbeitsabstand am Mikroskop ergeben sich auch Vorteile bei der analytischen Untersuchung von Proben im biomedizinischen Bereich. Bei der Verwendung von Mikrotiterplatten kann eine Korrektur von Aberrationen, die von der Mikrotiterplatte herrühren, ausgeglichen werden. Die Mikrotiterplatte kann optisch in den Strahlengang einbezogen und das Mikroskopobjektiv teilweise (so z.B. die Frontlinse) in die Mikrotiterplatte integriert werden.

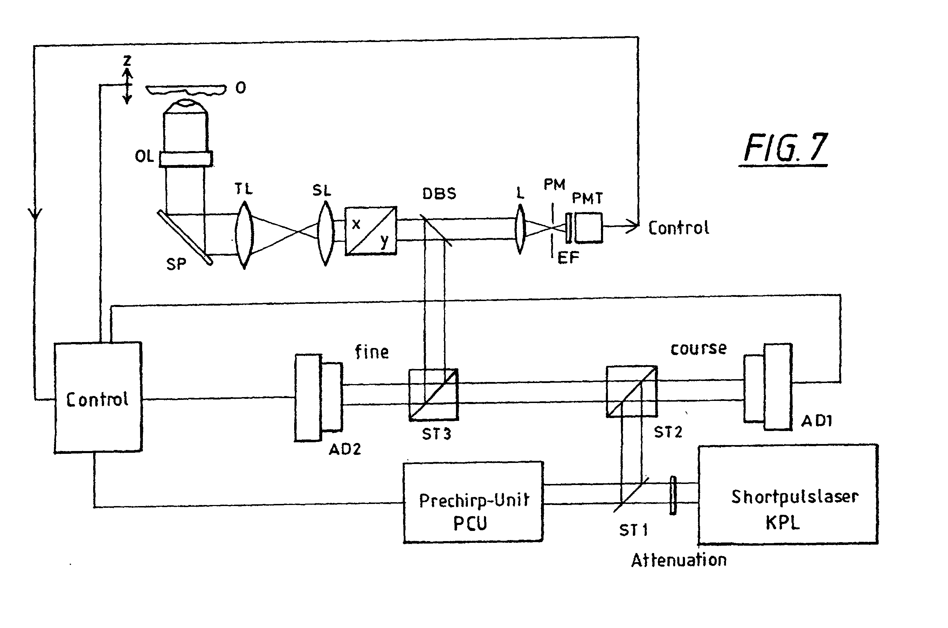

Fig.1b zeigt beispielhaft eine Ausführung eines Lichtmikroskopes mit deformierbaren Spiegeln, die die Wellenfront in Richtung der Tubuslinse korrigieren. Eine erste und eine zweite Modulatoranordnung werden über einen Strahlteiler zwischen Objektiv und Tubuslinse in die Abbildung einbezogen. Vor den Modulatoranordnungen sind jeweils noch Optiken zur Pupillenanpassung vorgesehen. Auf derartige Anordnungen wird noch in Verbindung mit Fig.7 näher eingegangen.

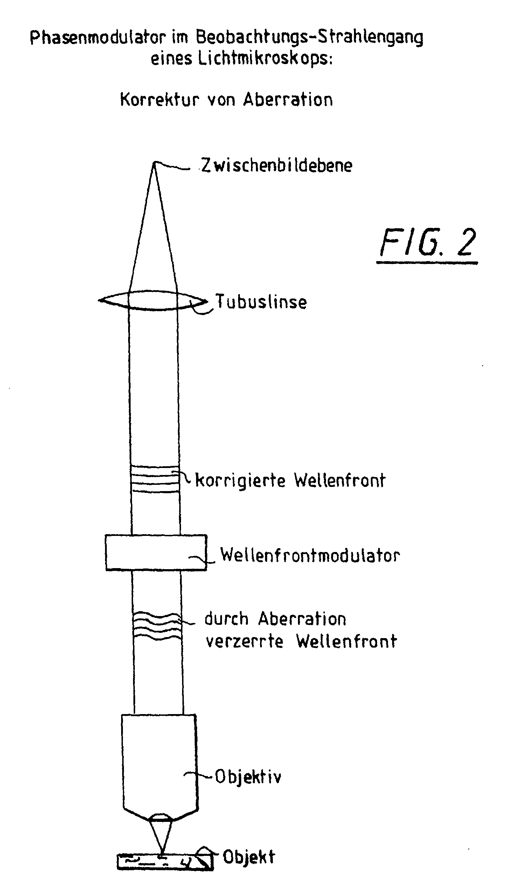

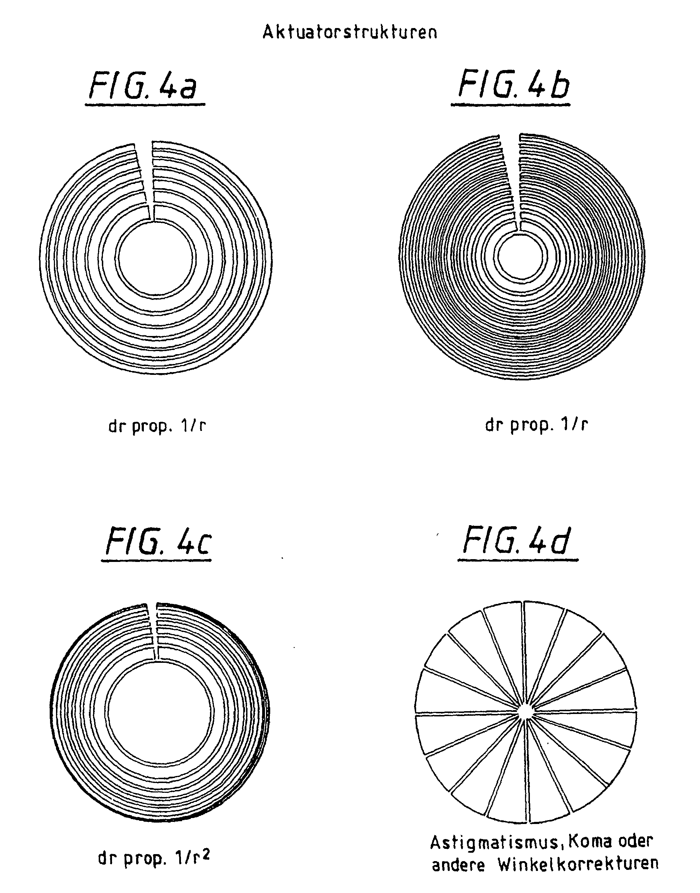

Durch eine geeignete Verformung der Wellenfront durch den Wellenfrontmodulator ist auch eine Korrektur von Aberrationen durch das Präparat und die Probenumgebung möglich. Dies ist in Fig.2 dargestellt. Hier wird die durch Abberationen verzerrte Wellenfront durch den zwischen Objektiv und Tubuslinse angeordneten Wellenfrontmodulator korrigiert. Dazu reichen jedoch die sphärischen Anteile in der Wellenfrontkorrektur nicht aus, es müssen asphärische Anteile hinzugenommen werden. Für die rotationssymmetrischen Aberrationen (alle Terme der sphärischen Aberration höherer Ordnung) reichen ringförmige Aktuatoren aus. Für die winkelabhängigen Aberrationen müssen segmentierte Aktuatoren verwendet werden (Fig.4). Diese können entweder miteinander im selben Wellenfrontmodulator integriert werden, oder man setzt zwei unabhängige Modulatoren in verschiedenen Pupillenebenen ein. Im ersten Fall skaliert die Anzahl der Aktuatoren quadratisch mit der geforderten Auflösung, im letzteren linear, was geringeren Aufwand an Ansteuerelektronik bedeutet.

Die derzeit gängigen Phasenmodulatoren sind in ihrer Amplitude und ihrem maximal erzeugbaren Phasengradienten begrenzt. Dies begrenzt wiederum die Korrekturmöglichkeiten weitab vom Arbeitspunkt des Objektives. Denkbarer Ausweg ist die Kombination von adaptiver Optik mit konventioneller Glasoptik. Letztere dient dabei zur Erzeugung eines großen Phasengradienten bzw. großer Wellenfront-Amplituden, die Feinabstimmung wird durch die adaptive Optik erreicht.

Bei einer Verschiebung zu größerem Fokusabstand tritt, bedingt durch die erforderliche konvexe Wellenfront in der Pupille, eine Vignettierung ein, die zu einer geringeren Lichtausbeute bzw. einer verringerten nutzbaren Apertur führt. Diese Einschränkung ist konstruktionsbedingt und kann im Prinzip zukünftig bei der optischen Auslegung eines Objektivs berücksichtigt werden.

Bei der Verschiebung des Fokus entstehen darüber hinaus Aberrationen im Strahlengang, die zu Verzerrungen des Bildes führen können. Zur Korrektur dieser Aberrationen können der Wellenfront wie oben angedeutet nicht-sphärische Anteile überlagert werden. Nach mathematischen Berechnungen kann bereits mit geringen rotationssymmetrischen Anteilen der Ordnung $r^4$ und $r^6$ (sphärische Aberration höherer Ordnung) an der Wellenfront eine erhebliche Bildverbesserung erreicht werden (Strehlverhältnis >98%).

Ein weiterer Vorteil des Verfahrens liegt im achromatischen Verhalten eines reflektionsbasierten Wellenfrontmodulators. Bei geeigneter Beschichtung des Membranspiegels kann der gesamte Spektralbereich vom tiefen UV bis hin zum fernen IR phasenmoduliert werden. Chromatische Aberrationen sind (bis auf Absorptionseffekte) ausgeschlossen. Daraus ergeben sich neue Verfahren der chromatischen Korrektur in der Bilderzeugung. Die Beleuchtung wird dazu sequentiell auf unterschiedliche Wellenlängen eingestellt, wobei für jede der individuellen Wellenlängen der Wellenfrontmodulator auf die geeignete optische Korrektur eingestellt wird. Man erhält so einen Satz von chromatisch optimal korrigierten Bildern, die überlagert eine Weißlichtaufnahme hoher Farbkorrektur ergeben, welche bei Verwendung klassischer Glasoptik so nicht erreicht werden kann. Prinzipiell kann damit ein Objektiv mit Wellenfrontmodulator auf beliebig viele Wellenlängen im optischen Spektrum optimal korrigiert werden.

Zur Verschiebung des Fokus und zur Korrektur von sphärischen Aberrationen haben die erforderlichen Wellenfronten zunächst lediglich rotationssymmetrischen Charakter. Zur Erzeugung solcher Wellenfronten in der Pupille des Mikroskopobjektivs muß die adaptive Optik eine Verteilung der Aktuatoren mit zum Rand hin zunehmender Ortsfrequenz aufweisen (Fig.4), da am Rand der größte Gradient in der Wellenfront auftritt.

Fig.4 zeigt verschiedene Aktuatorstrukturen, mit zunehmender Ortsfrequenz in Fig.4a bis Fig.4c sowie mit Segmenten in Fig.4d zur Korrektur beispielsweise von Astigmatismus und Koma.

Bei einer kameragestützten Bildaufnahme tritt besonders bei hoher räumlicher Auflösung der Effekt des Pixelmismatchings auf. Dabei ist das Mikroskopbild gegen die Kamera verschoben, so daß die einzelnen Bilder des Videosignals räumlich verschoben sind. Dieses Problem läßt sich durch einen variablen Kippanteil in der Wellenfront des abzubildenden Signals beseitigen. Durch eine geeignete Regelung können die Zitterbewegungen des Bildsignals ausgeregelt und somit ein statisches Bild erzeugt werden.

Ein anderes Problem der kameragestützten Bildaufnahme ist die Bildfeldwölbung. Durch die Verwendung eines Wellenfrontmodulators im Abbildungsstrahlengang kann während des Betriebes die Bildfeldwölbung auf Kosten anderer Parameter wie chromatische Korrektur verbessert werden.

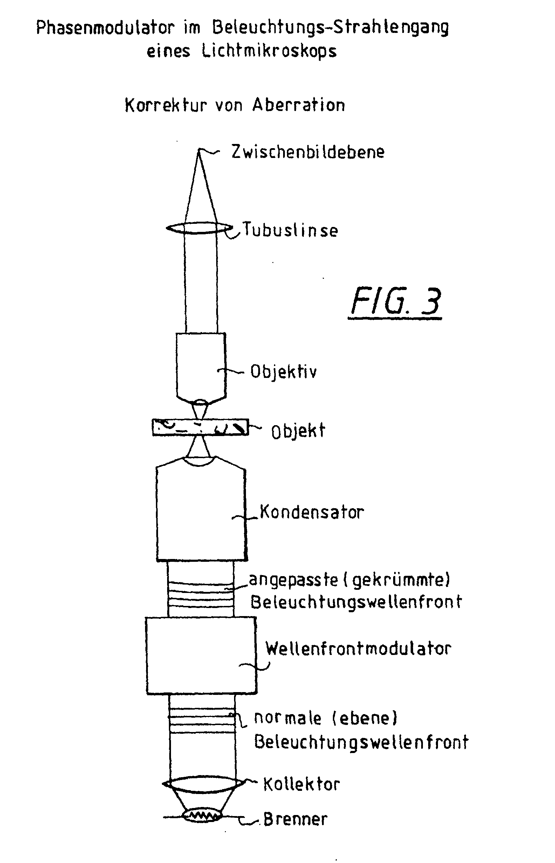

Im *Beleuchtungsstrahlengang* lassen sich bei der *konventionellen Lichtmikroskopie* durch den Einbau adaptiver Optik eine flexible Auslegung der Optik, Verbesserung der optischen Eigenschaften des Mikroskops sowie neue Beleuchtungstechniken realisieren. In ähnlicher Weise wie im Beobachtungsstrahlengang kann ein Wellenfront-Phasenmodulator die Abbildung des Beleuchtungsbrenners (oder ggf. des Lasers) in die Objektebene optimieren. Ebenso kann bei kritischer Beleuchtung eine gleichmäßige Ausleuchtung des Objektraumes eingestellt werden. Fig.3 zeigt einen Wellenfrontmodulator zwischen Kollektor und Kondensor, die einem Beleuchtungsbrenner nachgeordnet sind.

Mit einem Wellenfront-Amplitudenmodulator kann die Beleuchtungsintensität in der Objektebene räumlich bezüglich Intensität und Homogenität optimiert werden. Prinzipiell ist so ein Pupilleneingriff machbar. Durch gezielte Veränderung des Kippanteiles der Wellenfront kann eine schiefe Beleuchtung des Objektraumes erreicht werden.

In der *konfokalen Mikroskopie bzw. im Laser-Scan-Mikroskop* sind durch die Verwendung von Laserlicht zur Beleuchtung die Anwendungen noch leichter realisierbar als in der klassischen Lichtmikroskopie.

So bietet bei der Verwendung eines Lasers in der Beleuchtung der Einsatz eines Wellenfrontmodulators bereits bei der Einkopplung in die Beleuchtungsfaser Vorteile. Hier sind variable Anpassungsoptiken realisierbar, deren Brennweiten und Abbildungsverhältnis abhängig von den Strahleigenschaften der (des) Laser (s) und der verwendeten Faser(n) einstellbar ist, um eine optimale Fasereinkopplung zu erreichen. Anordnungen auf demselben Prinzip können auch bei der Kopplung von Beleuchtungsfasern auf die Mikroskopoptik eingesetzt werden. Durch die Schnelligkeit der Modulatoren sind auch zeitaufgelöste Messungen und Multiplexverfahren realisierbar, um zwischen einem oder mehreren Lasern und verschiedenen Fasern umzuschalten.

Bei der konfokalen Abbildung kann die Transmission durch das definierende Pinhole dynamisch angepaßt werden. Sowohl Lage als auch Durchmesser des Fokus ist in weiten Grenzen variabel. Der oder die Beleuchtungslaser können so optimal gemäß der jeweiligen Anforderungen justiert werden. Weiter kann auch die Kontur der Lichtverteilung des Fokus dem Pinhole angepaßt werden. Nicht nur rotationssymmetrische, sondern auch andere Umrisse, wie rautenförmige oder rechteckige Aperturen, die in real verwirklichten Pinholes immer vorkommen, können damit angepaßt und auf maximale Transmission oder minimale Beugungsverlußte optimiert werden. Eine solche Optimierung kann einerseits statisch durch zuvor berechnete Parameter eingestellt werden oder während des Betriebs auf bestimmte, zu optimierende Parameter geregelt werden.

Wie bei der klassischen Lichtmikroskopie auch läßt sich die chromatische Korrektur abhängig vom verwendeten Beleuchtungslaser einstellen. Durch die Verwendung schneller, synchron angesteuerter Wellenfrontmodulatoren in der Lasereinkopplung, der Beleuchtungs- sowie der Aufnahmeoptik können sequentiell Bilder bei unterschiedlicher Wellenlänge, jeweils optimal chromatisch korrigiert, aufgenommen werden.

## Kurze Beschreibung der Zeichnungen

Die Erfindung soll anhand von Ausführungsbeispielen näher erläutert werden. Die zugehörigen Zeichnungen zeigen in

| Fig.1 und Fig.1a | den schematischen Abbildungsstrahlengang eines Lichtmikroskopes |
| Fig.2 | die Korruktur einer durch Abberationen verzerrte Wellenfront mit einem zwischen Objektiv und Tubuslinse angeordneten Wellenfrontmodulator |
| Fig.3 | einen zwischen Kollektor und Kondensor angeordneten Wellenfrontmodulator zur Einstellung einer gleichmäßigen Ausleuchtung des Objektraumes |
| Fig.4 | verschiedene Aktuatorstrukturen, darunter in Fig.4a bis Fig.4c mit zunehmender Ortsfrequenz und in Fig.4d mit Segmenten |
| Fig.5 | verschiedene Ausführungen von Wellenfrontmodulatoren, darunter mit elektrostatischen (Fig.5a), piezogesteuerten (Fig.5b) und bimorphen Membranen (Fig.5c) als Stellelemente |
| Fig.6 | Wellenfrontmodulator mit elektrostatischem Membranspiegel |
| Fig.7 | das Prinzip eines Laser-Scanning-Mikroskops gemäß der Erfindung mit einem Kurzpulslaser |
| Fig.8 | den prinzipiellen Aufbau einer Prechirp-Einheit |

## Ausführliche Beschreibung der Zeichnungen

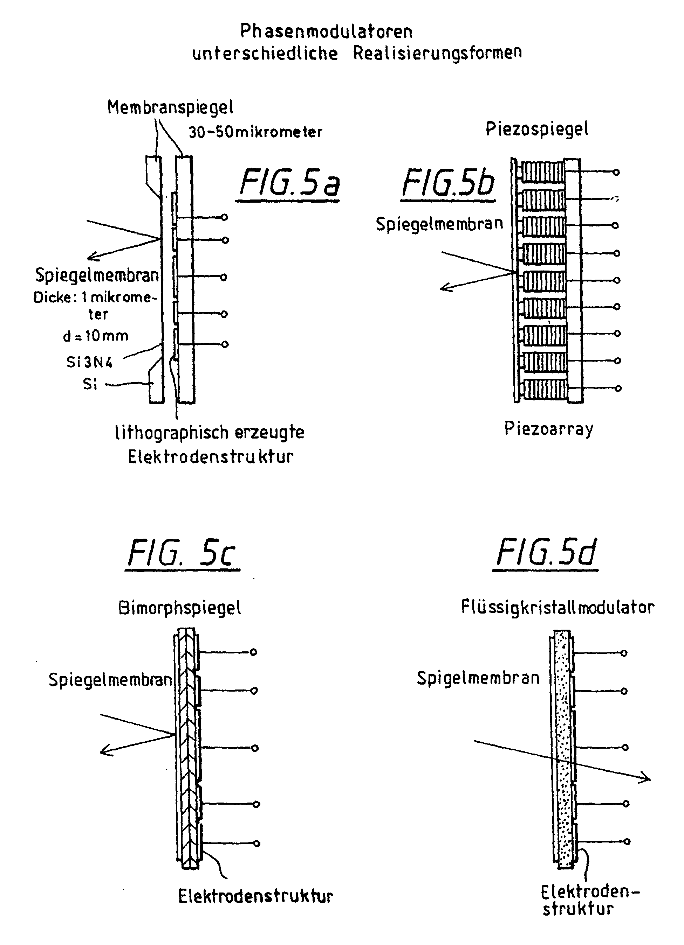

In Fig.5 sind verschiedene Ausführungen von Wellenfrontmodulatoren dargestellt, wie sie derzeit erhältlich sind. So sind etwa transmittierende Modulatoren auf LCD-Basis, wie in Fig.5d dargestellt, verfügbar oder auch reflektierende Modulatoren mit beweglichen Membranen. Letztere wiederum können nach der Art ihrer Stellelemente unterschieden werden: elektrostatische (Fig.5a), piezogesteuerte (Fig.5b) und bimorphe Membranen (Fig.5c) als Stellelemente. Obwohl sich die Erfindung auf Wellenfrontmodulatoren allgemein bezieht, hat der elektrostatische Membranspiegel wegen seiner zahlreichen Vorteile den Vorzug.

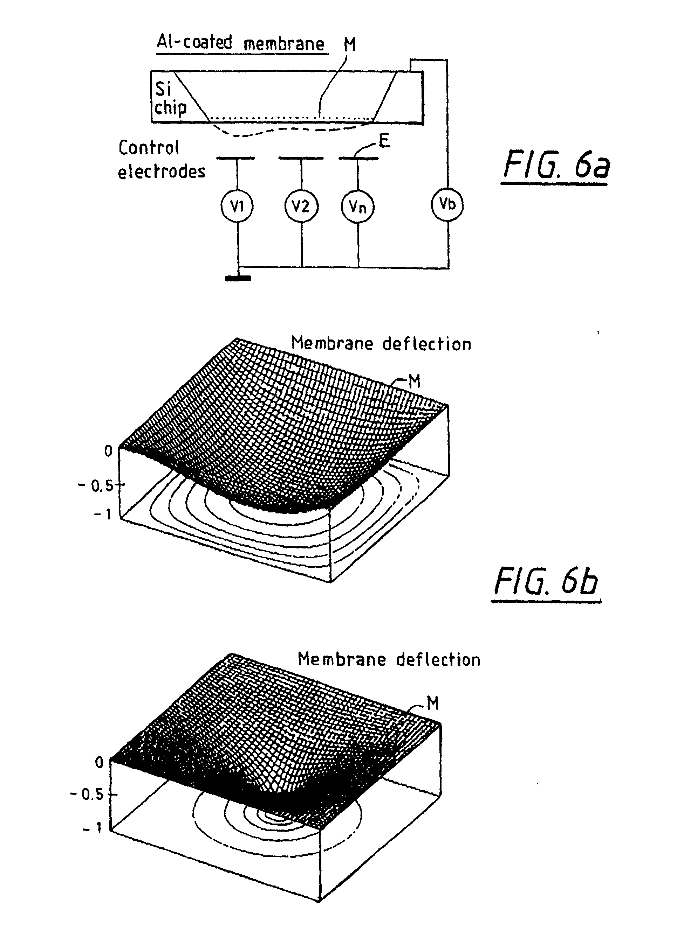

Ein solcher mikrofabrizierter monolithischer Membranspiegel, der in Fig.6a und Fig.6b deutlicher mit Membran M und Ansteuerelektroden E dargestellt ist, zeichnet sich durch hohe Ebenheit und gute optische Qualität der reflektierenden Fläche (< $\lambda/20$), geringe Baugröße (2mm bis 20mm), hysteresefreie Ansteuerung mit niedrigen Spannungen (< 100V), hohe mechanische Grenzfrequenz der Membran (mehrere MHz), großer Hub ($\approx 100\mu m$) und damit kleiner Krümmungsradius (bis herunter zu lm) und in weiten Grenzen variabler Aktuatorstruktur mit hoher räumlicher Dichte aus. Die minimale Aktuatorgröße ist letztlich nur durch die Bedingung begrenzt, daß diese größer sein muß als der Abstand Elektrode zu Membran.

Der große Vorteil des elektrostatischen Membranspiegels liegt in der Tatsache, daß zur Einstellung einer parabolischen Form lediglich ein konstantes Potential an die Aktuatorelektroden angelegt werden muß. Die parabolische Form des Spiegels ergibt sich bei konstanter Ansteuerung der Elektroden aus dem physikalischen Verhalten der Membran (konstante Flächenkraft). Man kann also mit geringer Dynamik in der Steuergröße, also der angelegten Spannung, eine große Dynamik in der Stellgröße (Spiegelhub) erreichen.

Die Erfindung ist in Anspruch 1 definiert und wird an Beispiel von Figur 7 beschrieben. Fig.7 zeigt ein Laser-Scanning-Mikroskop mit einem Kurzpulslaser, insbesondere zur Mehrphotonenanregung, das im folgenden näher erläutert wird.

Im Falle *nichtlinearer Prozesse* hängt das detektierte Signal von der n-ten Potenz der Anregungsintensität ab. Zur Anregung sind hohe Intensitäten nötig. Diese hohen Intensitäten erzielt man durch den Einsatz von Kurzpulslasern und die anschließende beugungsbegrenzte Fokussierung mit Mikroskopobjektiven. Ziel der Anordung ist es deshalb den Fokus möglichst klein (d.h. ideal) und die Pulslänge möglichst kurz in der Probe zu realisieren. Somit können hohe Intensitäten in der Probe erzielt werden. Nichtlineare Prozesse sind zum Beispiel die Multi-Photonen-Absorption, Generierung der Oberflächen Zweiten Harmonischen (SSHG) sowie der Zweiten Harmonischen (SHG), zeitaufgelöste Mikroskopie, OBIC, LIVA usw.

Die Erfindung nun anhand der *Zwei-Photonen Mikroskopie* näher erläutert werden. Dabei wird von folgendem Stand der Technik ausgegangen:

Aus WO 91/07651 ist ein Zwei-Photonen-Laser-Scanning-Mikroskop bekannt, mit Anregung durch Laserpulse im Subpicosekundenbereich bei Anregungswellenlängen im roten oder infraoten Bereich. Die Veröffentlichungen EP 666473A1, WO 95/30166, DE 4414940 A1 beschreiben Anregungen im Picosekundenbereich und darüber, mit gepulster oder kontinuierlicher Laserstrahlung. Ein Verfahren zum optischen Anregen einer Probe mittels einer Zwei-Photonen-Anregung ist in DE C2 4331570 beschrieben.

Das Gebrauchsmuster DE 29609850 beschreibt die Einkopplung der Strahlung von Kurzpulslasern in einen mikroskopischen Strahlengang über Lichtleitfasern. Hier ist zwischen Laser und Lichtleitfaser eine optische Anordnung zur wellenlängenabhängigen zeitlichen Veränderung der Laserpulse vorgesehen, die aus mindestens zwei optischen Elementen, beispielhaft Prismen oder Spiegeln, besteht. Mit dieser optischen Anordnung ist der zeitliche Unterschied verschiedener Wellenlängen der Laserpulse einstellbar, indem der Abstand zwischen den optischen Elementen verändert wird.

Bekanntermaßen eröffnet die Zwei-Photonen-Fluoreszenzmikroskopie gegenüber der konventionellen Ein-Photonen-Fluoreszenzmikroskopie grundsätzlich folgende Möglichkeiten:

- Realisierung einer nichtlinearen Anregungswahrscheinlichkeit $I_{2hv} = A \cdot I_{exc}^2$ mit folgenden Vorteilen: 3D-Diskriminierung, d.h. Tiefendiskriminierung ohne Verwendung einer konfokalen Blende; Ausbleichen bzw. Zerstörung der Zellen findet - wenn überhaupt - nur im Fokus statt; Verbessertes Signal- / Rauschverhältnis; Einsatz neuer Detektionsmethoden, wie z.B. non-descanned detection;

- Die NIR-Anregung mit Femtosekunden-Lasern besitzt für die Untersuchung von biologischen Präparaten nachstehende Vorzüge: Arbeiten im Bereich des optischen Fensters für biologische Präparate (700-1400 nm) wegen geringer Absorption, deshalb auch zur Untersuchung von Lebendpräparaten geeignet; niedrige Belastung der Zellen wegen geringer mittlerer Anregungsleistung; hohe Eindringtiefen infolge geringer Streuung;

- Die Anregung von sogenannten UV-Farbstoffen ohne Verwendung von UV-Licht bedeutet, daß keine UV-Optiken nötig sind;

- Bei der Zwei-Photonen-Anregung liegen breitbandige Anregungsspektren der Farbstoffe vor, daher ist die Anregung verschiedenster Farbstoffe mit nur einer Anregungswellenlänge möglich.

Beim Durchgang ultrakurzer Pulse durch ein dispersives Medium, z.B. Glas oder Präparat treten insbesondere folgende Effekte auf:

*Group Velocity Dispersion (CVD):* Femtosekunden-Laserimpulse besitzen eine spektrale Breite von mehreren Nanometern. Die rot verschobenen Wellenlängenanteile propagieren schneller durch ein positiv dispersives Medium (z.B. Glas) als die blau verschobenen Wellenlängenanteile. Dadurch kommt es zu einer zeitliche Verbreiterung der Pulse und damit zu einer Verringerung der Peakleistung bzw. des Fluoreszenzsignales.

Eine Prechirp-Einheit (Prismen-, Gitterpaar oder Kombination aus beiden) stellt ein negativ dispersives Medium dar, das heißt blau verschobene Wellenlängenanteile propagieren schneller als rot verschobene. Mit Hilfe einer Prechirp-Einheit kann somit die Group Velocity Dispersion kompensiert werden.

*Propagation Time Difference (PTD):* Die Glaswege entlang des Strahlquerschnittes sind unterschiedlich (siehe Fig4). Dadurch kommt es zu einer räumlichen Vergrößerung des Fokus, wodurch eine Verringerung des Auflösungsvermögens und der Peakleistung bzw. des Fluoreszenzsignales eintritt.

Die Kompensation dieses Effektes kann mit Hilfe eines Wellenfrontmodulators, beispielsweise einem adaptiven Spiegel, erfolgen. Mit einem Modulator dieser Art kann die Phase und die Amplitude der Lichtwelle im Anregungsstrahlengang gezielt beinflußt werden. Als Modulator ist ein reflektierendes optisches Element (z.B. deformierbarer Spiegel) oder ein transmittierendes optisches Element (z.B. LCD) denkbar.

*Wellenfrontdistorsion durch Streuung und Diffraktion/ Refraktion:* Diese Störungen können zum einen durch die verwendeten Optiken selbst und zum anderen durch das Präparat verursacht werden. Durch die Wellenfrontdistorsion kommt es wie beim zweiten Effekt ebenfalls zu Abweichungen vom idealen Fokus. Auch dieser Effekt kann mit einem Wellenfrontmodulator (wie bereits dargestellt) kompensiert werden.

Die vorgenannten Effekte sind in der Regel abhängig von der Eindringtiefe in das Präparat. Insofern werden mit der erfindungsgemäßen Anordnung die Effekte GVD, PTD und Wellenfrontdistorsion synchron als Funktion der Eindringtiefe in das Präparat kompensiert, um im Fokus des Präparats, auch bei hohen Eindringtiefen, kurze Pulslängen und einen möglichst ideal kleinen Fokus erzielen zu können.

Ein möglicher Aufbau der Vorrichtung ist beispielhaft in Fig.7 gezeigt. Die Strahlung eines Kurzpulslasers KPL gelangt in eine Prechirping-Einheit PCU und von dieser über Strahlteiler ST1 und Strahlteiler ST2, ST3 auf zwei adaptive optische Elemente AD1, AD2. Das erste Elemente AD1 (course) wird für die Grobeinstellung der Wellenfront genutzt. Damit ist es möglich den Fokus in z-Richtung zu verschieben. Mit dem zweiten Element AD2 (fine) werden die Wellenfrontdistorsionen und die PTD-Effekte ausgeglichen. Das Laserlicht gelangt über Strahlteiler DBS, x/y - Scaneinhelt, Optik SL, TL, Spiegel SP und das Objektiv OL auf das Objekt. Das vom Objekt kommende Licht gelangt zurück über Strahlteiler DBS , Linse L , Pinhole PH und Filter EF auf einen Detektor, hier beispielsweise ein Photomultiplier PMT, der seinerseits wie auch PCU, AD1, und AD2 mit einer Controleinheit verbunden ist.

Hierdurch kann beispielsweise die Einstellung der adaptiven Elemente AD1, AD2 sowie der Prechirping - Einheit erfolgen, bis am PMT ein maximales Signal anliegt. Besonders vorteilhaft ist der dargestellte Strahlengang für ein inverses Mikroskop, bei dem die Beobachtung "von unten" erfolgt, wobei der Vorteil darin besteht, daß die Probe für eventuelle Manipulationen im vollen Umfang zugänglich bleibt.

Fig.6 zeigte bereits den prinzipiellen Aufbau eines adaptiven Spiegels. Er besteht aus einer hochreflektierenden Membran (z.B. Siliziumnitrat) und aus einer Struktur mit Elektroden. Durch eine gezielte Ansteuerung der einzelnen Elektroden kann die darüberliegende Membran deformiert werden und so die Phasenfront des Laserstrahles beeinflußt werden. Es können somit die Deformationen des Phasenfront, die beim Durchgang der Pulse durch das System und die Probe entstehen, kompensiert werden.

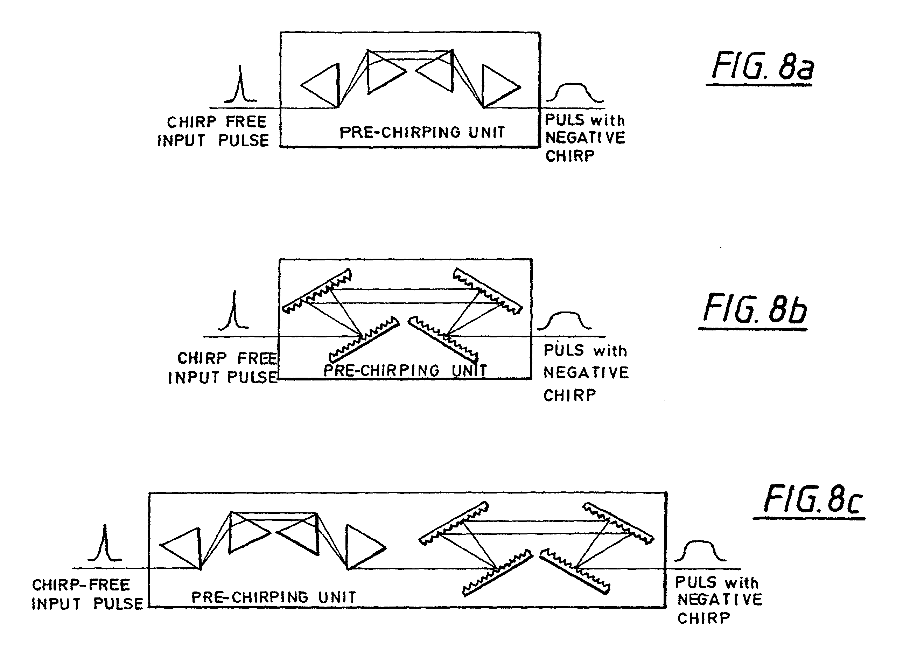

Die Prechirp-Einheit kann aus einem oder mehreren Prismen oder Gittern oder aus einer Kombination beider bestehen. Hierzu zeigt Fig.8 mögliche Anordnungen, so in Fig.8a mit vier Prismen, in Fig.8b mit vier Gittern und in Fig.8c mit Prismen und Gittern. Die Funktionsweise soll anhand eines Prismenkompressors in Fig.8a näher erläutert werden. Die spektrale Breite eines Femtosekunden-Laserpulses beträgt mehrere Nanometer. Beim Durchgang des Laserstrahles durch das erste Prisma wird der Strahl spektral in seine Komponenten zerlegt. Anschließend durchlaufen die spektralen Komponenten im zweiten Prisma unterschiedliche Glaswege. Dadurch werden rotverschobene Wellenlängenanteile gegenüber den blauverschobenen zeitlich verzögert. Die Prechirp-Einheit wirkt somit wie ein negativ dispersives Medium und eine Kompensation der GVD ist mit möglich.

Erst durch die Verwendung der oben beschriebenen Vorrichtung können die Vorteile der Anregung nichtlinearer Prozesse vollständig genutzt werden und eine Verwendung von Low-Power Femtosekunden-Lasern auch bei höheren Eindringtiefen in die Probe wird möglich. Es können somit hohe Peakleistungen bei Verwendung von geringen mittleren Anregungsleistungen technisch realisiert werden, so daß die Belastung der biologischen Präparate bzw. der Proben gering gehalten, ein hohes Signal-/ Rauschverhältnis und eine hohe Auflösung in axialer und lateraler Richtung erzielt werden.

Für alle beschriebenen Anordnungen kann vorteilhaft über einen Wellenfrontsensor, der über einen Strahlteiler (nicht dargestellt) mit dem Mikroskopstrahlengang in Verbindung steht, die Wellenfrontanpassung erfaßt und kontrolliert bzw. definiert eingestellt werden.

## Patentansprüche

1. Laser-Scanning-Mikroskop mit einer als Kurzpulslaser ausgebildeten Beleuchtungsquelle zur Anregung nichtlinearer Prozesse, bevorzugt zur Mehr-Photonen-Anregung einer Probe, **dadurch gekennzeichnet, daß** in den Beleuchtungsstrahlengang mindestens ein adaptives optisches Element eingeordnet ist, das in Abhängigkeit von Stellgrößen die Wellenfront des Beleuchtungslichtes derart beeinflußt, dass die Vergrößerung des Fokus kurzer Pulse aufgrund unterschiedlicher Glaswege entlang des Strahlquerschnitts ausgeglichen wird.

2. Laser-Scanning-Mikroskop nach Anspruch 1, **dadurch gekennzeichnet, daß** im Beleuchtungsstrahlengang nacheinander zwei reflektive adaptive optische Elemente (AD1, AD2) vorhanden sind, deren Spiegelflächen in Abhängigkeit von den Stellgrößen verformbar sind und von denen ein erstes Element (AD1) zur Grobbeeinflussung und ein zweites Element (AD2) zur Feinbeeinflussung der Wellenfront dient.

3. Laser-Scanning-Mikroskop nach Anspruch 1 oder 2, **dadurch gekennzeichnet, daß** in den Beleuchtungsstrahlengang zwischen der Beleuchtungsquelle und dem mindestens einen adaptiven optischen Element eine Einrichtung zur zeitlichen Verzögerung von Wellenlängenanteilen des Beleuchtungslichtes eingeordnet ist.

4. Laser-Scanning-Mikroskop nach Anspruch 3, **dadurch gekennzeichnet, daß** die Einrichtung zur zeitlichen Verzögerung von Wellenlängenanteilen als Prechirp-Einheit (PCU) aus optischen Prismen und/oder Gittern gebildet ist.

5. Laser-Scanning-Mikroskop nach einem der vorgenannten Ansprüche, **dadurch gekennzeichnet, daß**

   - ein bevorzugt als Photomultipller (PMT) ausgebildeter Detektor für das während der Probenbeobachtung vom Fokusort kommende Licht sowie
   - eine Recheneinrichtung zur stetigen Ermittlung der Stellgrößen aus der Intensität des detektierten Lichtes vorhanden sind.

## Claims

1. Laser scanning microscope with an illumination source constructed as a short pulse laser for excitation of non-linear processes, preferably for multiphoton excitation of a specimen, **characterised in that** at least one adaptive optical element is arranged in the illuminating beam path and influences the wavefront of the illuminating light as a function of control variables in such a way that the magnification of the focus of short pulses is compensated for due to differing glass paths along the beam cross-section.

2. Laser scanning microscope as claimed in Claim 1, **characterised in that** two reflective adaptive optical elements (AD1, AD2) are provided one after the other in the illuminating beam path, their reflector surfaces being deformable as a function of the control variables, and of these elements a first element (AD1) serves for rough influencing and a second element (AD2) serves for fine influencing of the wavefront.

3. Laser scanning microscope as claimed in Claim 1 or 2, **characterised in that** a means for time-delaying wavefront components of the illuminating light is arranged in the illuminating beam path between the illumination source and the at least one adaptive optical element.

4. Laser scanning microscope as claimed in Claim 3, **characterised in that** the means for time-delaying of wavelength components is formed as a pre-chirping unit (PCU) consisting of optical prisms and/or grids.

5. Laser scanning microscope as claimed in one of the aforementioned claims, **characterised in that**

   - a detector preferably constructed as a photomultiplier (PMT) for the light coming from the focal point during observation of the specimen and
   - a computer unit for continuous determination of the control variables from the intensity of the detected light

   are provided.

## Revendications

1. Microscope à balayage à laser comportant une source d'éclairage réalisée en tant que laser à courtes impulsions, pour activer des processus non linéaires, de préférence pour l'excitation multi-photonique d'un échantillon, **caractérisé en ce que** dans le parcours des rayons d'éclairage est disposé au moins un élément optique d'adaptation qui influence, en fonction de grandeurs de réglage, le front d'ondes de la lumière d'éclairage de manière à compenser l'agrandissement du foyer de courtes impulsions sur la base de parcours de verre différents le long de la section transversale des rayons.

2. Microscope à balayage à laser selon la revendication 1, **caractérisé en ce que** dans le parcours des rayons d'éclairage sont disposés successivement deux éléments optiques (AD1, AD2) d'adaptation par réflexion, dont les surfaces réfléchissantes sont déformables en fonction des grandeurs de réglage et dont un premier élément (AD1) sert à influencer grossièrement le front d'ondes, et un deuxième élément (AD2) sert à l'influencer de manière fine.

3. Microscope à balayage à laser selon la revendication 1 ou 2, **caractérisé en ce que** dans le parcours des rayons d'éclairage entre la source d'éclairage et le ou les éléments optiques d'adaptation, est disposé un dispositif pour retarder dans le temps des composantes de longueurs d'onde de la lumière d'éclairage.

4. Microscope scanning à laser selon la revendication 3, **caractérisé en ce que** le dispositif pour retarder dans le temps des composants de longueurs d'ondes, est réalisé en tant qu'unité prechirp (PCU) constituée de prismes optiques et/ou de grilles.

5. Microscope à balayage à laser selon l'une des revendications précédentes, **caractérisé en ce que** sont prévus

   - un détecteur, conformé de préférence en photo-multiplicateur (PMT) pour la lumière provenant du lieu du foyer pendant l'observation de l'échantillon, ainsi que

   - un dispositif de calcul pour déterminer en permanence les grandeurs de réglage à partir de l'intensité de la lumière détectée.

Phasenmodulator im Beobachtungs-Strahlengang
eines Lichmikroskops:

Anpassung der Fokuslage im Objekt

— Zwischenbildebene

— Tubuslinse

*FIG.1*

— korrigierte Wellenfront

— Wellenfrontmodulator

— gekrümmte Wellenfront

— Objektiv

— Objekt

9

Phasenmodulator im Beobachtungs-Strahlengang
eines Lichtmikroskops:
Variation der Fokuslage

Objekt

neue Fokalebene
ursprüngliche Fokalebene

*FIG. 1a*

Objektiv

ursprüngliche Wellenfront ---
modulierte Wellenfront ——

Wellenfrontmodulator

zur Tubuslinse

Phasenmodulator im Beobachtungs-Strahlengang
eines Lichtmikroskops:

Anpassung der Fokuslage im Objekt

Ausführung mit deformierbaren Spiegel(n)

Zwischenbildebene

## FIG. 1b

Tubuslinse

korrigierte Wellenfront

Modulatorenanordnung 2

Modulatorenanordnung 1

Zweiter adaptiver Spiegel
oder einfacher Planspiegel

Pupillenanpassung

Adaptiver
Spiegel

Viertelwellenlängenplatte

gekrümmte
Wellenfront

Objektiv

Objekt

Phasenmodulator im Beobachtungs-Strahlengang
eines Lichtmikroskops:

Korrektur von Aberration

FIG. 2

# Phasenmodulator im Beleuchtungs-Strahlengang eines Lichtmikroskops

## Korrektur von Aberration

FIG. 3

- Zwischenbildebene
- Tubuslinse
- Objektiv
- Objekt
- Kondensator
- angepasste (gekrümmte) Beleuchtungswellenfront
- Wellenfrontmodulator
- normale (ebene) Beleuchtungswellenfront
- Kollektor
- Brenner

Aktuatorstrukturen

## FIG. 4a

dr prop. 1/r

## FIG. 4b

dr prop. 1/r

## FIG. 4c

dr prop. $1/r^2$

## FIG. 4d

Astigmatismus, Koma oder
andere Winkelkorrekturen

## Phasenmodulatoren
### unterschiedliche Realisierungsformen

Membranspiegel
30–50 mikrometer

_FIG.5a_

Spiegelmembran
Dicke: 1 mikrometer

d = 10 mm

Si3N4

Si

lithographisch erzeugte
Elektrodenstruktur

Piezospiegel

_FIG.5b_

Spiegelmembran

Piezoarray

_FIG. 5c_

Bimorphspiegel

Spiegelmembran

Elektrodenstruktur

_FIG.5d_

Flüssigkristallmodulator

Spigelmembran

Elektrodenstruktur

Al-coated membrane  M

Si chip

Control electrodes

E

V1  V2  Vn  Vb

*FIG. 6a*

Membrane deflection

M

0

- 0.5

- 1

*FIG. 6b*

Membrane deflection

M

0

- 0.5

- 1

16

*FIG.7*

EP 0 929 826 B1

CHIRP FREE
INPUT PULSE

PRE-CHIRPING UNIT

PULS with
NEGATIVE
CHIRP

*FIG. 8a*

CHIRP FREE
INPUT PULSE

PRE-CHIRPING UNIT

PULS with
NEGATIVE
CHIRP

*FIG. 8b*

CHIRP-FREE
INPUT PULSE

PRE-CHIRPING UNIT

PULS with
NEGATIVE
CHIRP

*FIG. 8c*

EP 0 929 826 B1